# EUROPEAN PATENT APPLICATION

(11) **EP 4 756 414 A1**
(43) Date of publication of application: **10.06.2026**
(21) Application number: 24849096.3
(22) Date of filing: 26.07.2024
(51) Int. Cl.: G01N 21/95

(54) **WELDED PART INSPECTION DEVICE AND METHOD**

(30) Priority: 01.08.2023 JP 2023125845
(71) Applicant: NHK Spring Co., Ltd., Yokohama-shi, Kanagawa 236-0004 (JP)
(72) Inventor: OKUBO Shuhei, Yokohama-shi Kanagawa 236-0004 (JP)
(74) Representative: Oppermann, Frank
(86) International application number: PCT/JP2024/026830
(87) International publication number: WO 2025/028444

(57) **Abstract**

Provided is a welded part inspection device capable of easily and surely determining quality of a welded part while easily capturing an image of the welded part. The welded part inspection device 1 for inspecting a welded part 5 of a stator 3 in which adjacent coil ends 17 of a plurality of segment coils 10 are joined together by welding, includes an image-capturing unit 23 that captures an image of the welded part 5, a monitor 25 positioned on an opposite side in an image-capturing direction across the welded part 5 with respect to the image-capturing unit 23 to display a background image 31 for the welded part 5, a control unit 27 configured to cause the monitor 25 to display the background image 31 and cause the image-capturing unit 23 to capture the image of the welded part 5 together with the background image 31, and determine a shape of the welded part 5 in contrast with the background image 31 based on a captured image according to the image-capturing.

## Description

### FIELD OF THE INVENTION

The present invention relates to an inspection device and a method for inspecting a welded part of a stator in which adjacent coil ends of a plurality of segment coils are joined together by welding.

### BACKGROUND OF THE INVENTION

As a conventional welded part inspection device, there is one that is provided with a camera, a light source, a wavelength conversion sheet, a light-absorbing means, and a control unit, and inspects a welded part that joins adjacent coil ends of a plurality of segment coils as disclosed in Patent Literature 1, for example.

In this welded part inspection device, the wavelength conversion sheet located on a back of the welded part is irradiated with blue light from the light source, and the irradiated blue light is converted into another wavelength and reflected by the wavelength conversion sheet. The welded part is, therefore, irradiated with the reflected light from a back side.

The camera captures an image of the welded part from a front side while blocking the blue light through the light absorbing means in a state that the welded part is irradiated with the light that is backlight. With this, the control unit easily and surely determines quality of the welded part based on an emphasized contour of the welded part.

The conventional welded part inspection device, however, causes the means and the process for capturing the image of the welded part to be complicated.

### CITATION LIST

### PATENT LITERATURE

PATENT LITERATURE 1: JP6606202B

### SUMMARY OF THE INVENTION

### PROBLEMS TO BE SOLVED BY THE INVENTION

The problem to be solved is to complicate means or process for capturing an image of a welded part.

### MEANS FOR SOLVING THE PROBLEM

The present invention provides a welded part inspection device for inspecting a welded part of a stator in which adjacent coil ends of a plurality of segment coils are joined together by welding. This welded part inspection device includes an image-capturing unit that captures an image of the welded part, a monitor positioned on an opposite side in an image-capturing direction across the welded part with respect to the image-capturing unit to display a background image for the welded part, a control unit configured to cause the monitor to display the background image and cause the image-capturing unit to capture the image of the welded part together with the background image, and a shape determination unit configured to determine a shape of the welded part in contrast with the background image based on a captured image according to the image-capturing.

Further, the present invention provides a welded part inspection method for inspecting a welded part of a stator in which adjacent coil ends of a plurality of segment coils are joined together by welding. This welded part inspection method displays a background image for the welded part from a monitor located on an opposite side in an image-capturing direction across the welded part with respect to an image-capturing unit that captures an image of the welded part, captures the image of the welded part together with the background image using the image-capturing unit, and determines a shape of the welded part in contrast with the background image based on a captured image according to the image-capturing.

### EFFECT OF THE INVENTION

The welded part inspection device and method according to the present invention easily and surely determine quality of a welded part while easily capturing an image of the welded part.

### BRIEF DESCRIPTION OF THE DRAWINGS

[FIG. 1] FIG. 1 is a schematic perspective view illustrating a welded part inspection device according to an embodiment 1 of the present invention.
[FIG. 2] FIG. 2 is a schematic plan view illustrating the welded part inspection device of FIG. 1.
[FIG. 3] FIG. 3 is a schematic perspective view of a stator to be inspected by the welded part inspection device of FIG. 1.
[FIG. 4] FIG. 4 is a schematic front view illustrating a relation between a monitor of the welded part inspection device and welded parts in FIG. 1.
[FIG. 5] FIG. 5 is a schematic front view illustrating a relation between a monitor of a welded part inspection device and welded parts according to an embodiment 2 of the present invention.
[FIG. 6] FIG. 6 is a schematic front view illustrating a relation between a monitor of a welded part inspection device and welded parts according to an embodiment 3 of the present invention.
[FIG. 7] FIG. 7 is a schematic plan view illustrating a relation between a monitor of a welded part inspection device and welded parts according to an embodiment 4 of the present invention.
[FIG. 8] FIG. 8 is a schematic plan view illustrating a welded part inspection device according to an embodiment 5 of the present invention.

### EMBODIMENT FOR CARRYING OUT THE INVENTION

The object of easily and surely determining quality of a welded part while easily capturing an image of the welded part is accomplished by using a monitor.

A welded part inspection device 1 is a device for inspecting a welded part 5 of a stator 3 in which adjacent coil ends 17 of a plurality of segment coils 10 are joined together by welding. The welded part inspection device 1 is provided with an image-capturing unit 23, a monitor 25, a control unit 27, and a shape determination unit 27.

The image-capturing unit 23 captures an image of the welded part 5. The monitor 25 is positioned on an opposite side in an image-capturing direction across the welded part 5 with respect to the image-capturing unit 23 to display a background image 31 for the welded part 5. The control unit 27 causes the monitor 25 to display the background image 31 and causes the image-capturing unit 23 to capture the image of the welded part 5 together with the background image 31. The shape determination unit 27 determines a shape of the welded part 5 in contrast with the background image 31 based on a captured image according to the image-capturing using the image-capturing unit 23.

In one embodiment, the control unit 27 may cause the monitor 25 to display a plurality of background images 31 having different image configurations at least in a region adjacent to a contour 5a of the welded part 5. In this case, the control unit 27 causes the image-capturing unit 23 to capture the image of the welded part 5 together with each of the plurality of the background images 31. The shape determination unit 27 determines the shape of the welded part 5 based on a composite image 33 obtained by combining a plurality of captured images for the plurality of background images 31.

Further, the monitor 25 may display a plurality of divided background images 32 divided so as to form respective backgrounds of a plurality of welded parts 5. In this case, the control unit 27 makes image configurations of the plurality of the divided background images 32 different from each other to cause at least one welded part 5 of the plurality of the welded parts 5 as an image-capturing target to become more apparent than the other welded part 5.

In addition, the control unit 27 may cause the monitor 25 to display a mark 35 for the welded part 5.

The monitor 25 may have not only a flat shape but also be bent in a plan view of the welded part 5 to have side portions 25a facing the welded part 5 in an intersecting direction with respect to the image-capturing direction.

The welded part inspection method is a method of inspecting the welded part 5 of the stator 3 in which adjacent coil ends 17 of the plurality of segment coils 10 are joined together by welding. The welded part inspection method displays the background image 31 for the welded part 5 from the monitor 25 positioned on the opposite side in the image-capturing direction across the welded part 5 with respect to the image-capturing unit 23 that captures the image of the welded part 5. Then, the welded part 5 is image-captured together with the background image 31 using the image-capturing unit 23 and the shape of the welded part 5 is determined in contrast with the background image 31 based on the captured image according to the image-capturing.

In addition, in the welded part inspection method, a plurality of background images 31 having different image configurations in the region adjacent to at least the contour 5a of the welded part 5 may be displayed on the monitor 25, the welded part 5 may be imaged together with each of the plurality of background images 31 by the imaging portion 23, and the shape of the welded part 5 may be determined based on the composite image 33 obtained by combining the plurality of the captured images for the plurality of background images 31.

In addition, in the welded part inspection method, the monitor 25 may display the divided background images 32 having different image configurations and divided so as to form the respective backgrounds of the plurality of welded parts 5, and the at least one welded part 5 of the plurality of welded parts 5 may be made more apparent as an image-capturing target than the other welded parts 5.

In addition, the mark 35 for the welded part 5 may be displayed on the monitor 25.

### EMBODIMENT 1

### [Welded part inspection device]

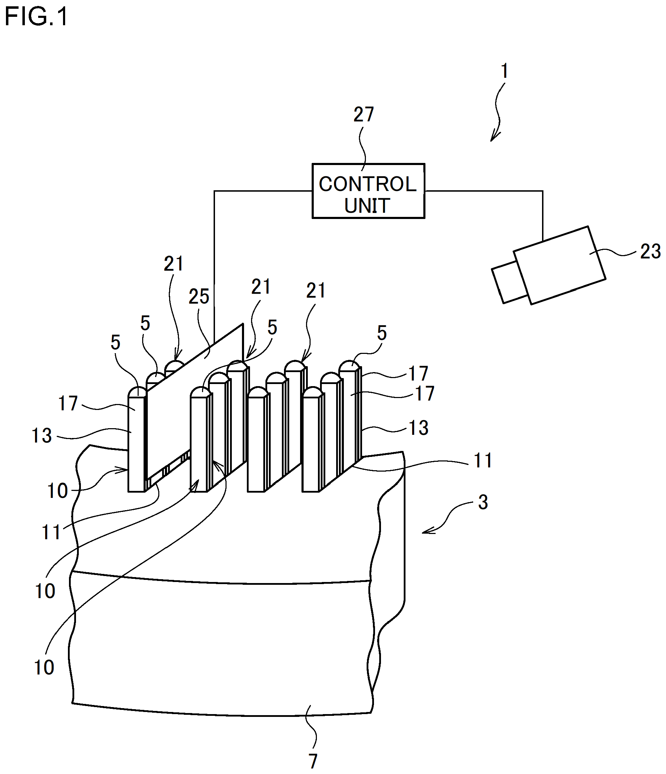

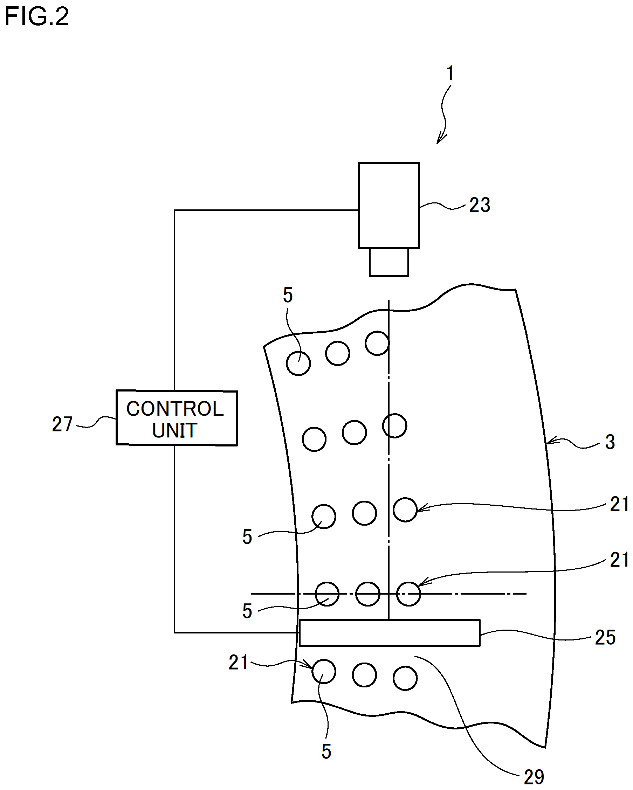

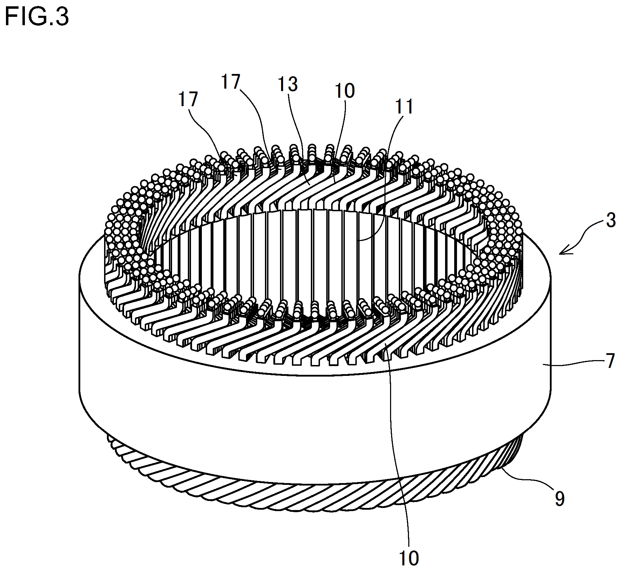

FIG. 1 is a schematic perspective view illustrating a welded part inspection device according to the embodiment 1 of the present invention. FIG. 2 is a schematic plan view illustrating the welded part inspection device of FIG. 1. FIG. 3 is a schematic perspective view of a stator to be inspected by the welded part inspection device of FIG. 1.

As illustrated in FIGS. 1 and 2, a welded part inspection device 1 of the present embodiment is a device that inspects a welded part 5 of a stator 3. In the present embodiment, the stator 3 to be inspected is configured as illustrated in FIG. 3, for example. In addition, the stator 3 is an example and may be an inspection target as long as it has similar welded parts 5.

The stator 3 forms a rotating electrical machine together with a rotor that is not illustrated. As illustrated in FIGS. 1 to 3, the stator 3 includes a stator core 7 and a coil 9.

The stator core 7 is formed in a cylindrical shape by stacking a plurality of plate-shaped core pieces, for example. A plurality of slots 11 penetrating in an axial direction are provided at intervals in a circumferential direction on an inner periphery of the stator core 7.

The coil 9 is configured to be wound around the inner periphery of the stator core 7 into a wave-winding shape. The coil 9 is composed of a plurality of segment coils 10. The plurality of the segment coils 10 are attached to the stator core 7 in combination in the circumferential direction.

Each segment coil 10 is formed in, for example, a U-shape, in particular, a hairpin shape by bending a rectangular wire made of an electric conductor. Accordingly, the segment coil 10 has a pair of leg portions 13.

The pair of the leg portions 13 are inserted into different slots 11 of the stator core 7. One end portion of the leg portion 13 is projected from an end of the stator core 7 and is inclined with respect to the axial direction of the stator core 7 by twisting. A tip of the leg portion 13 includes a coil end 17 extending along the axial direction of the stator core 7.

It should be noted that, in FIG. 1, the entire leg portion 13 extending to the coil end 17 is along the axial direction of the stator core 7 for easily understanding.

The coil end 17 is adjacent to the coil end 17 of the other segment coil 10 and is coupled to the coil end 17 of the other adjacent segment coil 10 by a welded part 5. A plurality of sets of joined coil ends 17 are arranged along a radial direction in each slot 11. In the present embodiment, three sets of the coil ends 17 are arranged along the radial direction. The welded parts 5 of these three sets are referred to as a parallel group 21.

Each welded part 5 is formed by welding at the tips of the set of the coil ends 17. The welding may be performed by, for example, laser welding, TIG welding, EB welding, or the like. The welded part 5 has a substantially spherical shape.

The welded part inspection device 1 of the present embodiment inspects quality of the welding based on a shape of the welded part 5.

As illustrated in FIGS. 1 and 2, the welded part inspection device 1 is provided with an image-capturing unit 23, a monitor 25, and a control unit 27.

The image-capturing unit 23 is an image-capturing device such as a CCD camera and captures an image of the welded part 5. The image-capturing unit 23 of the present embodiment captures an image of all three welded parts 5 of one parallel group 21 at a time. It should be noted that the image-capturing unit 23 may capture an image of part of the parallel group 21, for example, one or two welded parts 5 at a time.

The image-capturing unit 23 captures the image of the welded parts 5 from obliquely above. Although the image-capturing direction refers to a direction along an optical axis of the image-capturing unit 23, it does not need to be strictly interpreted and may be a direction in which the image-capturing unit 23 is oriented for image-capturing. The image-capturing direction is preferably 15 degrees to 75 degrees, more preferably 30 degrees to 60 degrees with respect to a horizontal direction. The horizontal direction is a horizontal direction when the stator 3 is horizontally placed. Further, in a plan view, the image-capturing direction is orthogonal to a parallel direction of the welded parts 5 of the parallel group 21 that are image-capturing targets.

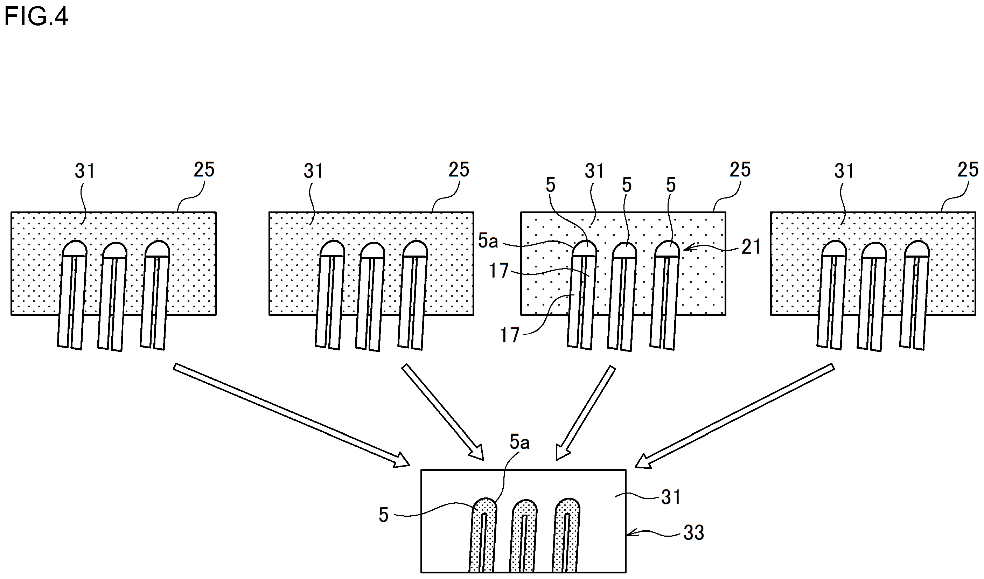

FIG. 4 is a front view illustrating a relation between the monitor 25 and the welded parts 5 to be imaged and a composite image. In addition, although FIG. 4 simultaneously illustrates the monitors 25 that display background images 31 having different image configurations to be described later, the single monitor 25 actually displays the plurality of the background images 31 in FIG. 4.

As illustrated in FIG. 1, FIG. 2, and FIG. 4, the monitor 25 is a sheet-shaped display device such as an organic EL display or a micro LED display. The monitor 25 of the present embodiment is formed into a rectangular sheet shape and is positioned on an opposite side in the image-capturing direction (referred to as a back side of the welded parts 5) across the welded parts 5 that are image-capturing targets with respect to the image-capturing unit 23. With this, the monitor 25 is located on the back side of all the welded parts 5 that are the image-capturing targets. It should be noted that the monitor 25 is not limited to the rectangle shape or may not be formed in the sheet shape as long as the monitor 25 is positioned on the back side of all the welded part 5 that are the image-capturing targets.

A position of the monitor 25 is in a gap 29 between the parallel groups 21 adjacent to each other in the circumferential direction of the stator core 7. When the monitor 25 is positioned in the gap 29, the monitor 25 is inserted into the gap 29 on the back side of the welded parts 5 disposed at an image-capturing position by rotating the stator 3 in the radial direction or the axial direction. After the image-capturing, the monitor 25 is retracted to the outside of the gap 29 and is inserted into the gap 29 on the back side of the welded parts 5 at the next image-capturing position after the stator 3 is rotated.

The monitor 25 displays the background image 31 for the welded parts 5 on the back side of the welded parts 5. The background image 31 may employ various types as long as the background image is contrasted with the welded parts 5 being the image-capturing target to determine the shapes of the welded parts 5. Preferably, the background image 31 emphasizes contours 5a of the welded parts 5. The monitor 25 of the present embodiment displays the background image 31 under the control of the control unit 27.

The control unit 27 is a computer having a processor and memories and controls the image-capturing unit 23 and the monitor 25. With this control, the control unit 27 causes the monitor 25 to display the background image 31 and causes the image-capturing unit 23 to capture the image of the welded parts 5 together with the background image 31.

As the display of the background image 31, a plurality of background images 31 having different image configurations are displayed on the monitor 25 at least in regions adjacent to the contours 5a of the welded parts 5. The image configurations are realized by color and different image configurations are different from each other in, for example, at least one of hue, brightness, and chroma.

The regions adjacent to the contours 5a of the welded parts 5 are regions in the background image 31 that boarder the contours 5a and are capturable by the image-capturing unit 23 together with the contours 5a of the welded parts 5. In order to make colors of the adjacent regions different, the entire area of the monitor 25 is composed of a single-colored background image 31 and the color of the single-colored background image 31 is changed as illustrated in FIG. 4 in the present embodiment. The color of the background image 31 may be changed every predetermined time.

It should be noted that only the color of the adjacent regions may be changed in the background image 31. In this case, the adjacent regions may be extracted through image recognition based on an image obtained by capturing the background image 31 and the welded part 5 using the image-capturing unit 23 and the color of the extracted adjacent regions may be changed.

The background image 31 may be fixed in color without changing. In this case, the background image 31 may be in a combination of a plurality of colors instead of the single color. In addition, the background image 31 may be a moving image instead of the still image. The moving image is changed in not only color but also a content such as the shape of the image.

The control unit 27 conducts the image-capturing using the image-capturing unit 23 together with the display of the background image 31. Namely, the control unit 27 causes the image-capturing unit 23 to capture the image of the welded parts 5 together with each of the plurality of background images 31. This image-capturing may be performed in synchronization with the change of the color of the background image 31.

The control unit 27 of the present embodiment functions as a shape determination unit. In addition, the shape determination unit may be configured by a computer or the like discrete from the control unit 27. The control unit 27 determines the shapes of the welded parts 5 in contrast with the background image 31 based on the captured image according to the image-capturing using the image-capturing unit 23. In the present embodiment, the shapes of the welded parts 5 are determined based on a composite image 33 obtained by combining the plurality of the captured images for the plurality of the background images 31.

In addition, the determination of the shapes of the welded parts 5 may be performed by an operator on a monitor for determination or the like instead of the computer processing.

### [Welded part inspection method]

A welded part inspection method sets the monitor 25 with respect to the stator 3 as illustrated in FIGS. 1 and 2, first. When the monitor 25 is set, the stator 3 is installed on a turntable or the like in advance and rotated to a desired position. With this rotation, the welded parts 5 of the parallel group 21 that are the image-capturing targets are arranged at the image-capturing position.

The monitor 25 is inserted, in the radial direction or the axial direction, into the gap 29 on the back side of the welded parts 5 disposed at the image-capturing position of the stator 3. The insertion of the monitor 25 may be performed by an appropriate robot arm or the like. The insertion of the monitor 25, however, may be performed relatively by moving the stator 3 side in a state that the monitor 25 is fixed.

The insertion of the monitor 25 into the gap 29 is completed by positioning the monitor 25 with respect to the welded parts 5. This positioning is performed so that the monitor 25 is located on the back side of all the welded parts 5 in the parallel group 21 that are the image-capturing targets. At this time, the monitor 25 may display the background image 31, and the image-capturing unit 23 may capture the image of the positions of the welded parts 5 with respect to the background image 31 of the monitor 25. Based on this captured image, the control unit 27 determines a positioning state of the monitor 25 and the monitor 25 may be moved to an appropriate position.

After setting the monitor 25 in this way, image-capturing for determining the shapes of the welded parts 5 is performed. Namely, the control unit 27 continuously displays the plurality of the background images 31 having different colors as image configurations on the monitor 25 for respective predetermined times as illustrated in FIG. 4. In synchronization with the display of the different background images 31, the control unit 27 causes the image-capturing unit 23 to capture the image of the welded parts 5 together with each of the plurality of the background images 31.

After the image-capturing, the monitor 25 is retracted to the outside of the gap 29. Then, the monitor 25 is inserted into the back side of the welded parts 5 at the next image-capturing position after the stator 3 is rotated.

On the other hand, the control unit 27 determines the shapes of the welded parts 5 in contrast with the background image 31 based on the captured image. In the present embodiment, the shapes of the welded parts 5 are determined based on the composite image 33 obtained by combining the plurality of the captured images for the plurality of the background images 31 having different colors.

Although it is not limited on a method of forming the composite image 33, it is performed so as to emphasize the contours 5a of the welded parts 5. Depending on the color of the background image 31, it varies emphasized portions of the contours 5a of the welded parts 5. Accordingly, it extracts most emphasized portions of the contours 5a of the welded parts 5 of the respective captured images and combines those portions to form the composite image 33, for example.

With this, the contours 5a of the welded parts 5 as a whole are emphasized with respect to the background image 31 to be clear in the composite image 33. In addition, the composite image 33 is binarized so that the background image 31 is in white and the welded parts 5 are in black. In this case, the binarization is easily performed if the background images 31 of the captured images to be combined are in blue, red, and green. The composite image 33, however, may not be binarized.

Based on the composite image 33, the control unit 27 accurately determines the shapes of the welded parts 5 and accurately determines the quality of the welding based on the shapes. The quality determination may be made by comparing the shapes of the welded parts 5 with a contour being a reference to determine whether or not the shapes of the welded parts are within a range of a shape as a normal product.

It should be noted that a shape of a normal product may be displayed on the background image 31 of the monitor 25 to determine, based on that shape, whether or not the shapes of the welded parts 5 of the image-capturing targets are within the range of the shape as a normal product. In this case, the shape as a normal product may be displayed superposingly on or parallelly with the welded part 5.

As mentioned above, the welded part inspection device 1 and method according to the present embodiment displays the background image 31 on the monitor 25 positioned on the opposite side with respect to the image-capturing unit 23 in the image-capturing direction across the welded parts 5 that are the image-capturing targets. The image capturing unit 23 is caused to capture the image of the welded part 5 together with the background image 31. Then, the shape of the welded part 5 is determined based on the captured image in contrast with the background image 31.

The present embodiment, therefore, accurately recognizes the shape of the welded part 5 in contrast with the background image 31 on the monitor 25 while the image-capturing of the welded part 5 is easily performed only by the monitor 25 and the image-capturing unit 23. The quality of the welded part 5 is easily and surely determined based on the recognized shape of the welded part 5.

In addition, the welded part inspection device 1 and method according to the present embodiment causes the monitor 25 to display the plurality of the background images 31 having different image configurations at least in the region adjacent to the contour 5a of the welded part 5. It causes the image-capturing unit 23 to capture the image of the welded part 5 together with each of the plurality of the background images 31. Then, the shape of the welded part 5 is determined based on the composite image 33 obtained by combining the plurality of the captured images for the plurality of the background images 31.

The present embodiment, therefore, extracts the respective emphasized portions of the contour 5a of the welded part 5 in the plurality of the captured images and combines these portions to form the composite image 33. The contour 5a of the welded part 5 is, therefore, emphasized as a whole with respect to the background image 31 to be clear in the composite image 33 and the quality of the welded part 5 is more easily and surely determined.

### EMBODIMENT 2

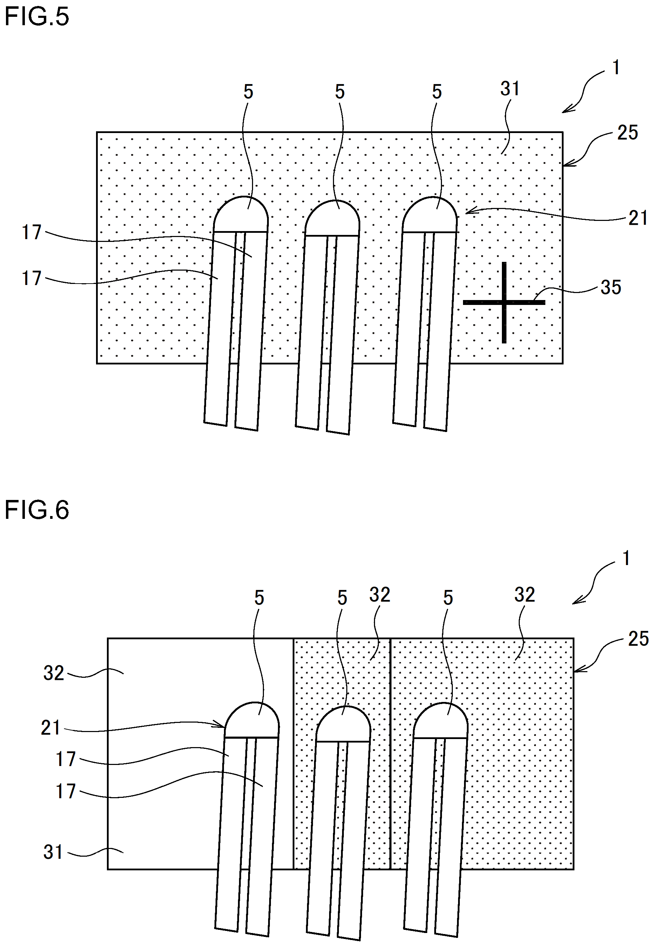

FIG. 5 is a schematic front view illustrating a relation between a monitor of a welded part inspection device and welded parts according to the embodiment 2 of the present invention. In addition, the embodiment 2 is in common with the embodiment 1 in the basic structure and components corresponding to of the embodiment 1 are represented with the same reference numerals, to omit redundant description.

A welded part inspection device 1 and method according to the embodiment 2 display a mark 35 for a welded part 5 that is the image-capturing targets on a background image 31 of a monitor 25. This display may be performed by control of a control unit 27 (see FIG. 1).

Although various shapes and numbers of the marks 35 may be adopted depending on application, one cross-shaped mark 35 is provided in the present embodiment. Although various positions of the mark 35 may be adopted depending on the application of the mark 35, the mark is displayed on the lower right side of the monitor 25 in FIG. 5 for positioning the welded parts 5 according to the present embodiment.

The welded part inspection device 1 and method of the present embodiment performs positioning between the monitor 25 and the welded parts 5 using the mark 35. Namely, the image-capturing unit 23 (see FIG. 1) captures the image of the welded parts 5 together with the background image 31 having the mark 35, and the monitor 25 is moved based on the captured image so that the mark 35 and the welded parts 5 have a predetermined positional relation.

Although the movement of the monitor 25 may be performed by a robot arm or the like under the control of the control unit 27, the operator may perform the movement of the monitor while recognizing the mark 35. The present embodiment, therefore, surely performs the positioning between the monitor 25 and the stator 3 by not only the control of the control unit 27 but also by the operator.

In this way, the present embodiment positions between the monitor 25 and the welded parts 5 surely. Further, positions (coordinates) of apexes of the welded parts 5 are surely determined after positioning the monitor 25 and the welded parts 5. As a result, posture such as bending of leg portions 13 of segment coils 10 are also determined using the positions of the apexes of the welded parts 5.

Further, the present embodiment performs the display of the background image 31 to be compared with the welded parts 5 of the plurality of the parallel groups 21 without variation due to the accurately positioning between the monitor 25 and the welded parts 5. As a result, the present embodiment accurately determines the shapes of the welded parts 5 without variation, to determine the quality of the welded parts 5 more easily and accurately.

In addition, the present embodiment also provides the same effects as those of the embodiment 1.

### EMBODIMENT 3

FIG. 6 is a front view illustrating a relation between a monitor of a welded part inspection device and welded parts according to the embodiment 3 of the present invention. In addition, the embodiment 3 is in common with the embodiment 1 in the basic structure and components corresponding to of the embodiment 1 are represented with the same reference numerals, to omit redundant description.

A welded part inspection device 1 and method according to the embodiment 3 cause a monitor 25 to display a plurality of divided background images 32 divided so as to form respective backgrounds of a plurality of welded parts 5. Then, image configurations of the plurality of the divided background images 32 are different from each other. With this, at least one welded part 5 of the plurality of the welded parts 5 as an image-capturing target becomes more apparent than the other welded part 5. The display of the divided background images 32 and the variation of the image configurations may be performed by the control of a control unit 27 (see FIG. 1).

The divided background images 32 are formed through image processing. In particular, the background image 31 and the welded parts 5 are image-captured by the image-capturing unit 23 (see FIG. 1) after the monitor 25 and the welded parts 5 are positioned. Based on this captured image, the control unit 27 recognizes a plurality of regions including the respective welded parts 5 on the monitor 25.

The control unit 27 causes the divided background images 32 to be displayed on the respective regions of the monitor 25. The welded part 5 as an image-capturing target is made apparent by variation in color as an image configuration of the divided background images 32. The making-apparent means to make the welded parts easy to be recognized.

The divided background images 32 of the present embodiment are varied in brightness as variation in color. In particular, the brightness of the divided background image 32 for the welded part 5 as the image-capturing target is made higher and the brightness of the divided background images 32 of the remaining welded parts 5 is made lower.

The welded part inspection device 1 and method according to the present embodiment, therefore, allow the welded part 5 that are the image-capturing target to be image-captured separately. In addition, the present embodiment provides the same effects as those of the embodiment 1.

### EMBODIMENT 4

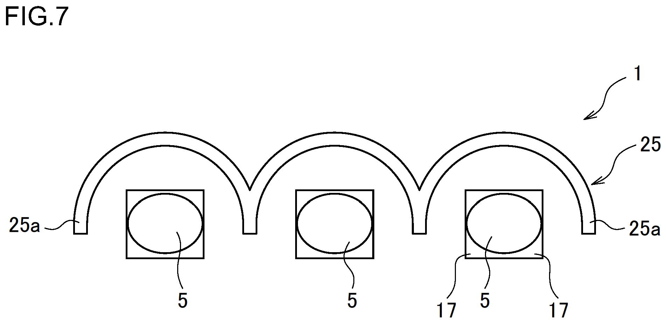

FIG. 7 is a schematic plan view illustrating a relation between a monitor of a welded part inspection device and welded parts according to the embodiment 4 of the present invention. In addition, the embodiment 4 is in common with the embodiment 1 in the basic structure and components corresponding to of the embodiment 1 are represented with the same reference numerals, to omit redundant description.

In a welded part inspection device 1 and method of the present embodiment, a monitor 25 is bent in a plan view with respect to each welded part 5 and has side portions 25a facing the welded part 5 in an intersecting direction with respect to the image-capturing direction. The intersecting direction is not limited to an orthogonal direction and also includes a direction obliquely intersecting.

The monitor 25 of the present embodiment has a planar shape curved in an arc shape. The monitor 25, however, may have another planar shape such as a V-shape or a channel shape.

In this embodiment, a background image 31 (see FIG. 4, etc.) is displayed from a back side of each welded part 5 while the background image 31 is displayed from lateral sides. The present embodiment, therefore, a shape of the welded part 5 is more surely recognized in contrast with the background image 31 on the monitor 25. As a result, it is possible to more easily and surely determine quality of the welded part 5.

### EMBODIMENT 5

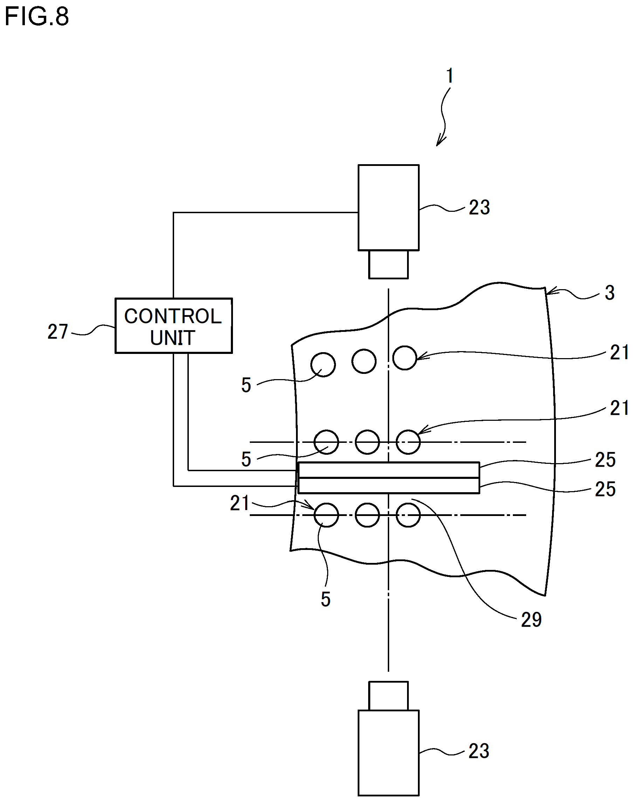

FIG. 8 is a schematic plan view illustrating a welded part inspection device according to the embodiment 5 of the present invention. In addition, the embodiment 5 is in common with the embodiment 1 in the basic structure and components corresponding to of the embodiment 1 are represented with the same reference numerals, to omit redundant description.

A welded part inspection device 1 according to the present embodiment is configured to capture images of front and back shapes of a welded part 5 and arranges a pair of monitors 25 and a pair of image-capturing units 23. The others are the same as those of the embodiment 1.

The pair of the monitors 25 have the same configuration as the monitor 25 of the embodiment 1, respectively. These monitors 25 are arranged reversely in the same gap 29 between the parallel groups 21 adjacent to each other, and rear faces that do not display the background image 31 face each other.

With this, one of the monitors 25 is arranged toward one side in the circumferential direction and is positioned on a back side of welded parts 5 of one of adjacent parallel groups 21 as image-capturing targets. The other of the monitors 25 is disposed toward the other side in the circumferential direction and is positioned on a back side of the welded parts 5 of the other of the adjacent parallel groups 21 as image-capturing targets.

It should be noted that it is not necessary for the pair of the monitors 25 to be positioned in the same gap 29 and to face each other with the back faces. Namely, one of the monitors 25 should be disposed toward one side in the circumferential direction and the other of the monitors 25 should be disposed toward the other side in the circumferential direction.

The pair of image-capturing units 23 have the same configuration as the image-capturing unit 23 of the embodiment 1, to capture images of the welded parts 5 of the adjacent parallel groups 21 using the pair of the monitors 25 as backgrounds from one side and the other side in the circumferential direction, respectively. Accordingly, one of the pair of the image-capturing units 23 captures the image of the welded parts 5 from the front side, and the other of the pair of image-capturing units 23 captures the image of the welded parts 5 from the back side.

The present embodiment, therefore, surely recognizes the shapes of the front and back of the welded parts 5, to determine quality of the welded parts 5 with more accuracy. In addition, the present embodiment also provides the same effects as those of the embodiment 1.

### DESCRIPTION OF NUMERALS

- 1: WELDED PART INSPECTION DEVICE
- 3: STATOR
- 5: WELDED PART
- 17: COIL END
- 23: IMAGE-CAPTURING UNIT
- 25: MONITOR
- 25a: SIDE PORTION
- 27: CONTROL UNIT (SHAPE DETERMINATION UNIT)
- 31: BACKGROUND IMAGE
- 33: COMPOSITE IMAGE
- 35: MARK

## Claims

1. A welded part inspection device for inspecting a welded part of a stator in which adjacent coil ends of a plurality of segment coils are joined together by welding, comprising:
an image-capturing unit that captures an image of the welded part;
a monitor positioned on an opposite side in an image-capturing direction across the welded part with respect to the image-capturing unit to display a background image for the welded part;
a control unit configured to cause the monitor to display the background image and cause the image-capturing unit to capture the image of the welded part together with the background image; and
a shape determination unit configured to determine a shape of the welded part in contrast with the background image based on a captured image according to the image-capturing.

2. The welded part inspection device according to claim 1, wherein
the control unit causes the monitor to display a plurality of background images having different image configurations at least in a region adjacent to a contour of the welded part, and causes the image-capturing unit to capture the image of the welded part together with each of the plurality of the background images, and
the shape determination unit determines the shape of the welded part based on a composite image obtained by combining a plurality of captured images for the plurality of the background images.

3. The welded part inspection device according to claim 1, wherein
the control unit is configured to cause the monitor to display a plurality of divided background images divided so as to form respective backgrounds of a plurality of welded parts and make image configurations of the plurality of the divided background images different from each other to cause at least one welded part of the plurality of the welded parts to become more apparent as an image-capturing targets than another welded part.

4. The welded part inspection device according to any one of claims 1 to 3, wherein
the control unit is configured to cause the monitor to display a mark for the welded part.

5. The welded part inspection device according to any one of claims 1 to 3, wherein
the monitor is bent in a plan view of the welded part to have side portions to face the welded part in an intersecting direction with respect to the image-capturing direction.

6. A welded part inspection method for inspecting a welded part of a stator in which adjacent coil ends of a plurality of segment coils are joined together by welding, comprising:
displaying a background image for the welded part from a monitor located on an opposite side in an image-capturing direction across the welded part with respect to an image-capturing unit that captures an image of the welded part;
capturing the image of the welded part together with the background image using the image-capturing unit; and
determining a shape of the welded part in contrast with the background image based on a captured image according to the image-capturing.

7. The welded part inspection method according to claim 6, wherein
a plurality of background images having different image configurations at least in a region adjacent to a contour of the welded part are displayed on the monitor,
the image-capturing unit captures the image of the welded part together with each of the plurality of background images, and
the shape of the welded part is determined based on a composite image obtained by combining a plurality of captured images for the plurality of the background images.

8. The welded part inspection method according to claim 7, wherein
the monitor displays a plurality of divided background images having different image configurations and divided so as to form respective backgrounds of a plurality of welded parts, and
at least one welded part of the plurality of the welded parts is made more apparent as an image-capturing target than another welded part.

9. The welded part inspection method according to claim 7 or 8, wherein
a mark for the welded part is displayed on the monitor.
